(19) **Europäisches Patentamt**
**European Patent Office**
**Office européen des brevets**

(11) **EP 2 902 865 A1**

(12) **EUROPEAN PATENT APPLICATION**

(43) Date of publication:
**05.08.2015 Bulletin 2015/32**

(51) Int Cl.:
**G05D 23/20** (2006.01)    **G05D 23/24** (2006.01)

(21) Application number: **14153445.3**

(22) Date of filing: **31.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ceruus Oy**
**91900 Liminka (FI)**

(72) Inventor: **Verkasalo, Matti**
**91900 Liminka (FI)**

(74) Representative: **Kolster Oy Ab**
**Iso Roobertinkatu 23**
**PO Box 148**
**00121 Helsinki (FI)**

(54) **Remote control of heating and/or cooling system controlled by themostat**

(57)    An apparatus implementing remote control of a heating and/or cooling system is disclosed. The apparatus comprises an electric interface coupleable in parallel with a conductor between a thermostat, controlling a heating and/or cooling system, and a negative temperature coefficient thermistor, quantifying the effect of the heating and/or cooling system as resistance in the conductor. Furthermore, the apparatus comprises a resistor and a relay coupled with the electric interface, a radio transceiver to receive a remote control comman, and to control the relay, so as to couple the resistor in parallel with the conductor thus decreasing the resistance measured by the thermostat in the conductor.

FIG. 1

**Description**

**Field**

The invention relates to an apparatus implementing remote control of a heating and/or cooling system.

**Background**

Various types of wireless remote control apparatuses are known in the art. However, traditional heating and/or cooling systems operating without the possibility of remote control are being used in old installations, and they are also still available as new. Consequently, a sophisticated solution enabling wireless remote control of traditional heating and/or cooling systems is desirable.

**Brief description**

The present invention seeks to provide an improved apparatus.

According to an aspect of the present invention, there is provided an apparatus as specified in claim 1.

The invention provides the advantage of adding wireless remote control to a traditional heating and/or cooling system, without needing to replace the existing parts, or causing changes in the existing functionality, as the apparatus is added to bring forth new functions.

**List of drawings**

Example embodiments of the present invention are described below, by way of example only, with reference to the accompanying drawings, in which

Figure 1 illustrates example embodiments of an apparatus; and
Figure 2, 3, 4, 5 and 6 illustrate various functions enabled by the apparatus.

**Description of embodiments**

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

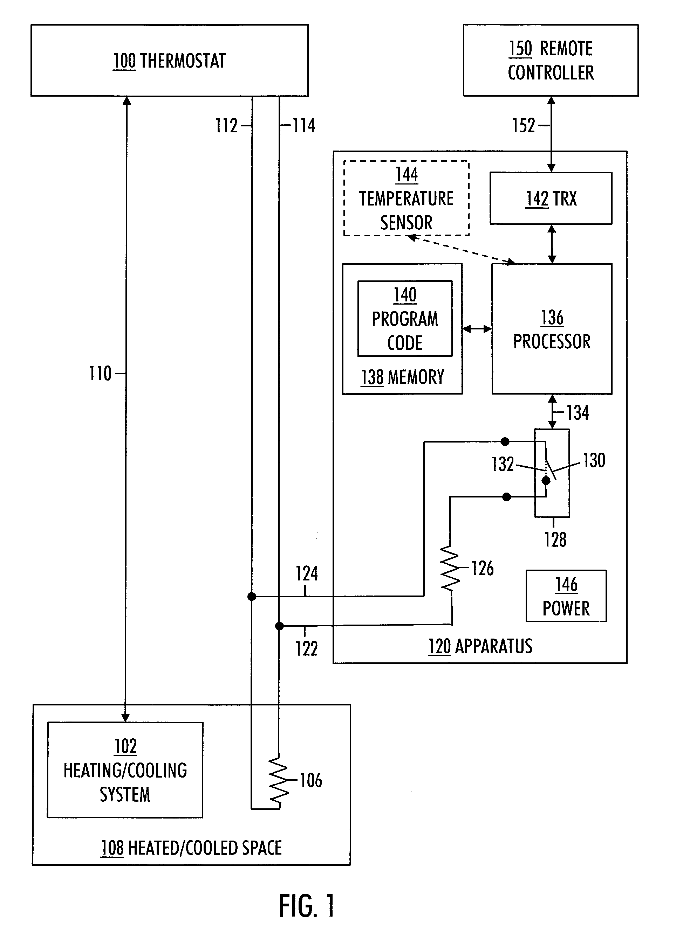

Figure 1 illustrates example embodiments of an apparatus 120 and its general operating environment.

A heating and/or cooling system 102 to be remote-controlled is located within a heated/cooled space 108.

In an example embodiment, the heating and/or cooling system 102 is a part of HVAC (heating, ventilation and air conditioning) implementing indoor or vehicular environmental comfort.

In an example embodiment, the heating and/or cooling system 102 comprises an electric heating system.

In an example embodiment, the heating and/or cooling system 102 comprises underfloor heating (and possibly also cooling) utilizing electrical resistance elements or fluid flowing in pipes.

In an example embodiment, the heating and/or cooling system 102 is implemented by a single heating element or by a single cooling element.

In an example embodiment, the heated/cooled space 108 is within a building that is any human-made structure used or intended for supporting or sheltering any use or continuous occupancy, or a part of a the building such as one or more rooms or the like.

In an example embodiment, the heated/cooled space 108 is in a vehicle that is designed or used to transport people or cargo. In an example embodiment, the vehicle includes land-based vehicles, such as cars, lorries/trucks, trailers, motorhomes, caravans and motorcycles, and also other types of vehicles, such as watercraft (ships, boats), aircraft, or trains, for example.

In an example embodiment, the heated/cooled space 108 is within an object such as a water barrel.

It is to be noted that the building, vehicle and object are only example embodiments of the general operating environment of the apparatus 120. Consequently, the apparatus 120 may be utilized to remote-control all kinds heating and/or cooling systems 108 having the described properties.

As shown in Figure 1, a thermostat 100 controlling the heating and/or cooling system 102 is coupled 110 with the heating and/or cooling system 102.

The thermostat 100 senses the temperature of the heated/cooled space 108 in order to maintain the temperature near a desired set point. The thermostat 100 implements control by switching the heating and/or cooling system 102 on or off, for example.

As shown in Figure 1, a negative temperature coefficient (NTC) thermistor 106 is coupled by a conductor 112, 114 with the thermostat 100. The thermistor 106 is a type of resistor whose resistance varies with temperature of the heated/cooled space 108. The thermistor 106 is of the NTC type meaning its resistance decreases with increasing temperature. Consequently, the NTC thermistor 106 quantifies the effect of the heating and/or cooling system 102 as resistance in the conductor 112, 114. The conductor 112, 114 permits the flow of electric charge between the thermostat 100 and thermistors 106. In an example embodiment, the conductor 112, 114 is a wire. In another example embodiment, the conductor 112, 114 is a conductive track on a printed circuit board.

The apparatus 120 comprises an electric interface 122, 124 coupleable in parallel with the conductor 112, 114 between the thermostat 100 and the NTC thermistor 106. In an example embodiment, the electric interface 122, 124 may comprise wires and/or suitable mechanical connectors to be connected with the conductor 112, 114.

The apparatus 120 further comprises a resistor 126 coupled with the electric interface 122, 124. In an example embodiment, the resistor 126 is a passive two-terminal electrical component implementing electrical resistance.

The apparatus 120 further comprises a relay 128 coupled with the electric interface 122, 124. In an example embodiment, the relay 128 comprises at least one of the following: an electrically operated switch, a solid-state relay, an opto-isolator relay.

As shown in Figure 1, the relay 128 may be in two positions: off (open) 130, or on (closed) 132.

The apparatus 120 further comprises a radio transceiver 142.

In an example embodiment, the radio transceiver 142 is a short range radio transceiver, including, but not limited to, Bluetooth, Bluetooth LE (Low Energy), Wi-Fi, WLAN (Wireless Local Area Network) based on IEEE (Institute of Electrical and Electronics Engineers) 802.11 standard or its evolution versions (IEEE 802.11 ac etc.), for example.

The radio transceiver 142 is used for communicating wirelessly 152 with a remote controller 150. In an example embodiment, the remote controller 150 is a data processing apparatus, such as a tablet computer, mobile phone, smartphone, phablet, laptop computer, desktop computer, or any other device capable of wirelessly communicating 152 with the apparatus 120. In an example embodiment, the remote controller 150 comprises a short range radio transceiver for communication 152 with the apparatus 120.

In an example embodiment, the remote controller 150 further comprises a radio transceiver interoperable with various wireless standard/non-standard/proprietary communication networks such as any mobile phone network, regardless of the generation (such as 2G, 3G, 4G, beyond 4G, etc.) such as GSM (Global System for Mobile Communications), GPRS (General Packet Radio Service), EGPRS (Enhanced GPRS), WCDMA (Wideband Code Division Multiple Access), UMTS (Universal Mobile Telephone System), 3GPP (The 3rd Generation Partnership Project), IMT (International Mobile Telecommunication), LTE (Long Term Evolution, LTE-A (LTE-Advanced), and other radio systems (in their present forms and/or in their evolution forms). This example embodiment enables that the remote controller 150 is remote-controlled from far away, from different cities, countries or even continents. In an alternate example embodiment, this is implemented such that the remote controller 150 utilizes its short range radio transceiver for communicating both with the apparatus 120 and a further remote controller. Still, another example embodiment provides a wired data interface for the remote controller 150, such as an Ethernet interface to a fixed data network, which enables the use of the further remote controller through the wired connection.

A further example embodiment provides a stand-alone remote controller 150, i.e. the remote controller 150 contains the required schedules etc. and commands for the apparatus 120. The schedules and/or commands may be inputted to the remote controller 150 by the user operating the user interface of the remote controller 150. In this case, there is no further remote controller communicating with the remote controller 150.

In these three example embodiments, the remote controller 150 does not necessarily need to comprise the radio transceiver interoperable with the communication network.

In an example embodiment, the communication network supports the use of subscriber identity modules (SIM), which may be an integrated circuit storing subscriber data, which is network-specific information used to authenticate and identify subscribers on the cellular network. The subscriber identity module may be embedded into a removable SIM card. Consequently, the remote controller 150 may include the SIM card (and a SIM card reader).

In an example embodiment, the apparatus 120 comprises a radio transceiver interoperable with various wireless standard/non-standard/proprietary communication networks, as described above for the remote controller 150. In such a case, the apparatus 120 may be remote controlled from far away, and the remote controller 150 need not necessarily be located near the apparatus 120 as required if the apparatus only uses the short range radio transceiver.

In an example embodiment, the remote controller 150 may control a plurality of heating and/or cooling systems 102, such as underfloor heating circuits within all rooms of the building, for example.

In an example embodiment, the remote controller 150 acts as a hub towards a further remote controller, such as a mobile apparatus handled by the proprietor of the heated/cooled space 108.

The apparatus 120 further comprises one or more processors 136, and one or more memories 138 including computer program code 140.

The term 'processor' 136 refers to a device that is capable of processing data. The term 'memory' 138 refers to a device that is capable of storing data.

The processor 136 and the memory 138 may be implemented by an electronic circuitry.

In an example embodiment, the processor 136 may be implemented as a microprocessor implementing functions of a central processing unit (CPU) on an integrated circuit. The CPU is a logic machine executing the computer program code 140. The computer program code 140 may be coded as a computer program using a programming language, which may be a high-level programming language, such as C, C++, or Java, or a low-level programming language, such as a machine language, or an assembler. The CPU may comprise a set of registers, an arithmetic logic unit (ALU), and a control unit (CU). The control unit is controlled by a sequence of the computer program code 140 transferred to the CPU from the working memory. The control unit may contain a number of microinstructions for basic operations. The implementation of the microinstructions may vary, depending on the CPU design. The microprocessor may also have an operating system (a dedicated operating system of an embedded system, or a real-time operating system), which may provide the computer program with system services.

A non-exhaustive list of implementation techniques for the processor 136 and the memory 140 includes, but is not limited to:

- logic components,
- standard integrated circuits,
- application-specific integrated circuits (ASIC),
- system-on-a-chip (SoC),
- application-specific standard products (ASSP),
- microprocessors,
- digital signal processors,
- special-purpose computer chips, and
- field-programmable gate arrays (FPGA).

The memory 138 may include a working memory and a non-volatile memory. Such memories may be implemented by a random-access memory (RAM), dynamic RAM (DRAM), static RAM (SRAM), a flash memory, a solid state disk (SSD), a suitable semiconductor, or any other means of implementing an electrical computer memory.

The computer program code 140 may be implemented by software and/or hardware. In an example embodiment, the software may be written by a suitable programming language, and the resulting executable program code 140 may be stored on the memory 138 and run by the processor 136. In an example embodiment, the functionality of the hardware may be designed by a suitable hardware description language (such as Verilog or VHDL), and transformed into a gate-level netlist (describing standard cells and the electrical connections between them), and after further phases the chip implementing the processor 136, memory 138 and the program code 140 may be fabricated with photo masks describing the circuitry.

In an example embodiment, the processor 136 and the memory 138 are a part of a microcontroller. In a further example embodiment, even the radio transceiver 142 is a part of the microcontroller chip. Furthermore, at least a part of the electric interface 122, 124 may be implemented by an input/output (I/O) interface belonging to the microcontroller.

In an example embodiment, the electric interface 122, 124 is replaceable such that the electric interface 122, 124 with a specific resistance value is installed to match a specific nominal value of the negative temperature coefficient thermistor 106. In another example embodiment the resistor 126 is replaceable such that the resistor 126 with a specific resistance value is installed to match a specific nominal value of the negative temperature coefficient thermistor 106. Either one or both of these two example embodiment may be utilized to enable the apparatus 120 to operate with thermostats 100 employing NTC thermistors 106 with different nominal values.

In an example embodiment, the relay 128 comprises an electrically operated switch comprising a control circuit formed by the relay 128 and the processor 136, and a controlled circuit formed by the thermostat 100, the conductor 112, 114, the negative temperature coefficient thermistor 106, and the relay 128. The resistor 126 belongs to the controlled circuit provided that the relay 1128 is switched on 132. The control circuit and the controlled circuit may form two separated electric circuits.

In an example embodiment, the apparatus 120 may comprise a power interface 146 to receive electrical energy for the operation. The power interface 146 couples the apparatus 120 to an internal or external power source, such as an accumulator, battery, or mains electricity. If mains electricity is used, the apparatus 120 may further comprise transformer. In Finland, for example, the transformer may transform an alternating current with 230 Volts input voltage into lower output voltage of 3 Volts, for example.

Now that the basic structure of the apparatus 120 and its connections to other parts have been described, we may inspect the operation of the apparatus 120.

The one or more memories 138 and the computer program code 140 are configured to, with the one or more processors 136, cause the apparatus 120 at least to receive a remote control command 152 with the radio transceiver 142, and on the basis of the received remote control command 152, control the relay 128 on 132, coupling the resistor 126 in parallel with the conductor 112, 114 and thus decreasing the resistance measured by the thermostat 100 in the conductor 112, 114.

The remote control command 152 may be received in a message, for example. The remote control command 152 may be real-time or almost real-time type of message, meaning that the command is to be processed and executed without unnecessary delays. However, in certain example embodiments, the command may be include timing information, meaning that the command will be executed later according to the determined schedule.

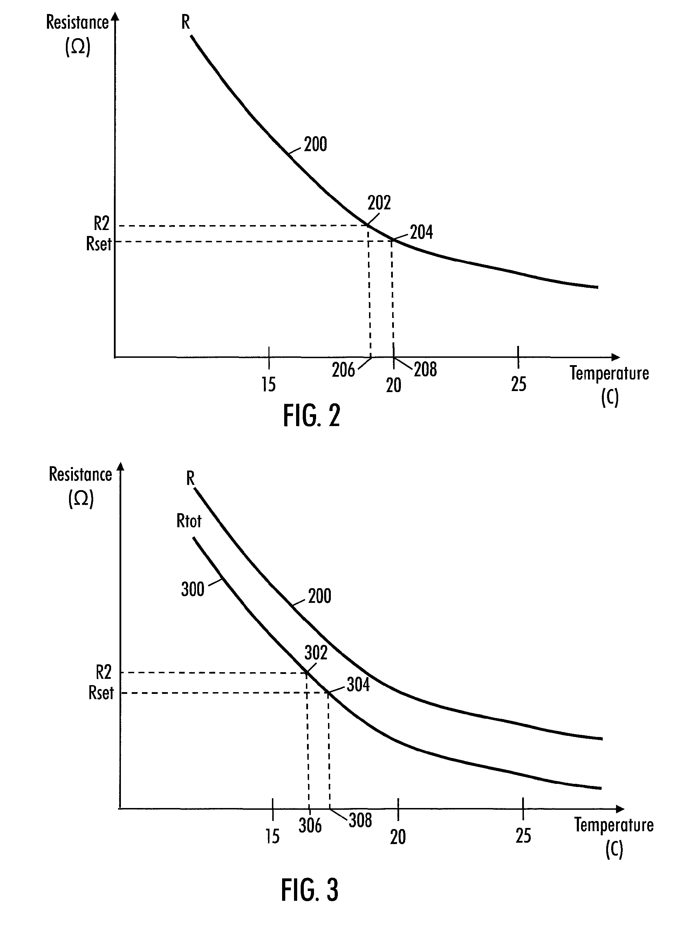

In order to realize the effect of this operation, let us first study Figure 2 illustrating the normal operation of the thermostat 100.

The thermostat 100 measures resistance value of the NTC thermistor 106.

In our example embodiment, set temperature 208 is here 20 degrees Celsius and the corresponding resistance value (measured by the NTC thermistor 106) is Rset.

The thermostat 100 has a parameter "delta R"= R2-Rset. This is called 'control hysteresis'.

If the heating is switched on, temperature rises until Rset value has been reached, whereupon, the thermostat 100 switches the heating off.

After that, the temperature sinks until R2 has been reached, whereupon the thermostat 100 switches the heating on.

These two steps are repeated over and over again, whereby the temperature is maintained within the limits 206, 208.

As can be seen from Figure 2, a curve 200 represents the relation between the temperature and the resistance measured by the NTC thermistor 106: point 204 on the curve 200 maps the temperature 208 with the resistance Rset, and point 202 the temperature 206 with R2.

Now, if the relay 128 is controlled on 132, it couples the resistor 126 in parallel with the conductor 112, 114 and thus decreases the resistance measured by the thermostat 100 in the conductor 112, 114. In a way, the thermostat 100 is deceived: it believes that the temperature in the space 108 is higher than it actually is, causing the temperature in the space 108 to sink.

In an example embodiment, the one or more memories 138 and the computer program code 140 are further configured to, with the one or more processors 136, cause the apparatus 120 further to: on the basis of the received remote control command 152, control the relay 128 off 130, coupling the resistor 126 off from the conductor 112, 114 and thus removing the decrease in the resistance measured by the thermostat 100 in the conductor 112, 114. With this simple operation, the deception is discontinued, causing the temperature in the space 108 to return to the normal (= the value set in the thermostat 100).

Figure 3 illustrates an example embodiment implementing a controlled temperature drop.

In an example embodiment, if the remote control command 152 comprises a static temperature drop command, the relay 128 is controlled on 132, causing the thermostat 100, while controlling the heating and/or cooling system 102 to maintain a set resistance range, to lower the temperature produced by the heating and/or cooling system 102 by a predetermined amount determined by the decrease in the resistance.

As an additional resistance RC of the resistor 126 is connected in parallel with the NTC thermistor, the total resistance value is lower and may be calculated with Ohm's law:

$$Rtot = R*RC/(R+RC) \qquad (1)$$

Points 302 and 304 on the total resistance curve 300 maps the temperature 306, 308 with the resistances R2, Rset. Thermostat 100 still has the same setting to keep resistance within the same control limits (Rset-R2). However, the corresponding temperature is now lower, Rset corresponds now with 17 degrees Celsius 308 and also R2 matches a correspondingly lower temperature 306. As a result, the apparatus 120 drops the temperature from 20 degrees Celsius down to 17 degrees Celsius (in this example).

In an example embodiment, if the remote control command comprises a return to normal temperature command 152, the relay 128 is controlled off 130, causing the thermostat 100, while controlling the heating and/or cooling system 102 to maintain the set resistance range, to remove the lowering of the temperature produced by the heating and/or cooling system 102 by the predetermined amount. In the example embodiment of Figure 3, the temperature returns back to the original 20 degrees Celsius.

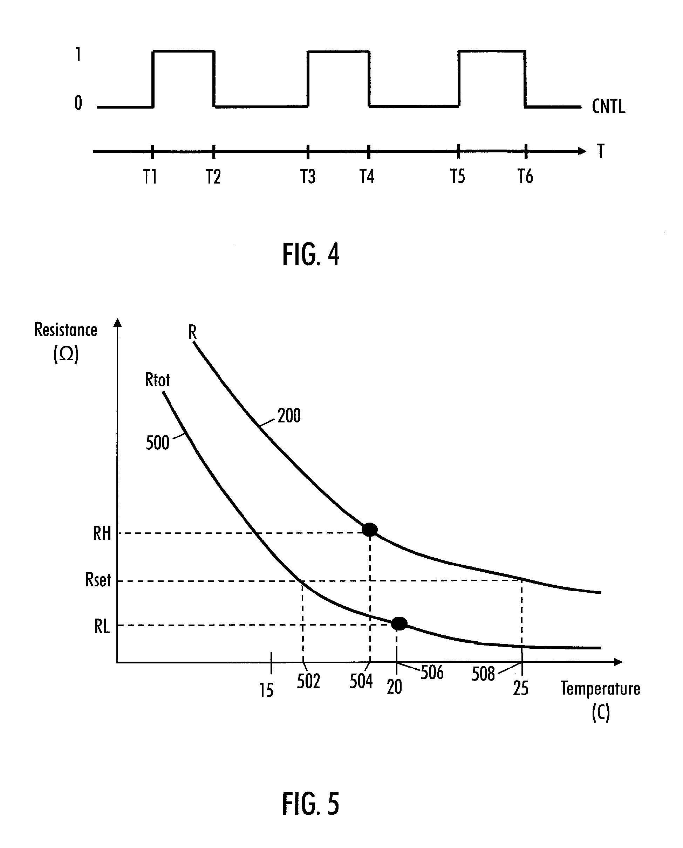

In an example embodiment, illustrated in Figure 4, if the remote control command comprises a drop/normal temperature schedule command 152, the relay 128 is controlled on the basis of the received drop/normal temperature schedule command such that a cycle comprising at least one period of normal temperature and at least one period of dropped temperature is realized. In Figure 4, the relay 128 is switched on 132 at times T1, T3 and T5 and off 130 at times T2, T4 and T6. In this example embodiment the apparatus 120 may comprise some means of keeping track of time, such as a clock circuit or a clock implemented on the basis of the processor 136 clock cycles, for example.

In an example embodiment illustrated in Figure 5, if the remote control command comprises a set target temperature 152, the one or more memories 138 and the computer program code 140 are further configured to, with the one or more processors 136, cause the apparatus 120 further to repeat the following cycle with a predetermined frequency selected such that the set target temperature is maintained within a predetermined margin:

measure a measured temperature reflecting the effect of the heating and/or cooling system 102;
if the measured temperature is higher than the set target temperature, control the relay 128 on 132, coupling the resistor 126 in parallel with the conductor 112, 114 and thus decreasing the resistance measured by the thermostat 100 in the conductor 112, 114, causing the thermostat 100, while controlling the heating and/or cooling system 102 to maintain a set resistance range, to lower the temperature produced by the heating and/or cooling system 102; or
if the measured temperature is lower than the set target temperature, control the relay 128 off 130, coupling the resistor 126 off from the conductor 112, 114 and thus removing the decrease in the resistance measured by the thermostat 100 in the conductor 112, 114, causing the thermostat 100, while controlling the heating and/or cooling system 102 to maintain the set resistance range, to remove the lowering of the temperature produced by the heating and/or cooling system 102.

In an example embodiment, the apparatus 120 further comprises a temperature sensor 144 to measure the measured temperature reflecting the effect of the heating and/or cooling system 102. In an alternate example embodiment, the one or more memories 138 and the computer program code 140 are further configured to, with the one or more processors 136, cause the apparatus 120 further to measure the measured temperature reflecting the effect of the heating and/or cooling system 102 on the basis of resistance measured from the conductor 112, 114. In the alternate example embodiment, the apparatus 120 actually measures the temperature in the same way as the thermostat 100 with the NTC thermistor 106.

In Figure 5, the thermostat 100 is set keep temperature in 25 degree Celsius 508, and the corresponding resistance is Rset. When the relay 128 is switched on 132, the corresponding temperature is only 16 degrees Celsius 502. This is because, as was explained earlier, the resistance curve changes from 200 to 500 when the resistor 126 is coupled in parallel with the NTC thermistor 106.

Let us suppose that the apparatus 120 has received a command "keep temperature in 20C", i.e., target temperature is set at 20 degrees Celsius 506.

When temperature is higher than 20 degrees Celsius 506, the apparatus 120 switches relay 128 on 132, and the thermostat 100 switches the heating off since RL is lower than Rset.

Consequently, the temperature starts to sink, and when the apparatus 120 measures a temperature lower than 19 degrees Celsius 504, the apparatus 120 switches the relay 128 off 130, whereby the thermostat 100 switches the heating on since RH is higher than Rset, and the temperature starts to rise.

In this way, the apparatus 120 keeps the temperature between 19 and 20 degrees Celsius.

In this example embodiment, the target temperature may be any temperature between 16 degrees Celsius 502 and 25 degrees Celsius 508.

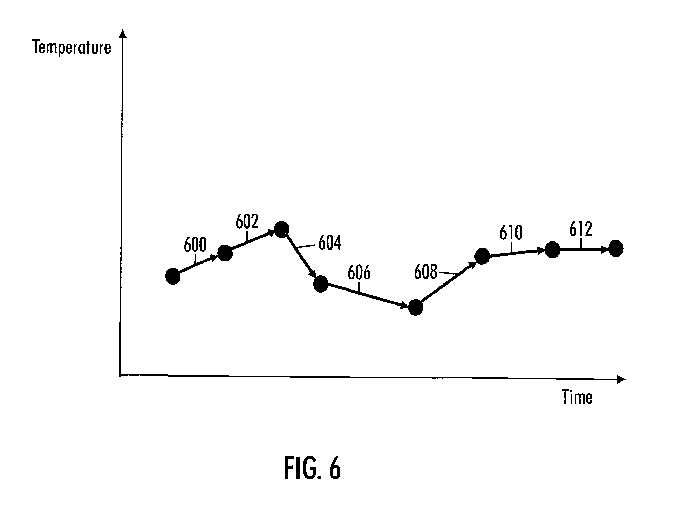

In an example embodiment illustrated in Figure 6, if the remote control command comprises a temperature schedule command 152, the relay 128 is controlled on the basis of the received temperature schedule command such that a cycle comprising a plurality of periods 600, 602, 604, 606, 608, 610, 612 with different temperatures is realized. The temperature schedule command defines a series of target temperatures with related clock time. The apparatus 120 changes the target temperature according to the temperature schedule, thereby realizing a continuous wireless temperature control.

It will be obvious to a person skilled in the art that, as technology advances, the inventive concept can be implemented in various ways. The invention and its embodiments are not limited to the example embodiments described above but may vary within the scope of the claims.

**Claims**

1. An apparatus, comprising
   an electric interface coupleable in parallel with a conductor between a thermostat, controlling a heating and/or cooling system, and a negative temperature coefficient thermistor, quantifying the effect of the heating and/or cooling system as resistance in the conductor,
a resistor coupled with the electric interface,
a relay coupled with the electric interface,
a radio transceiver,
one or more processors, and
one or more memories including computer program code,
wherein the one or more memories and the computer program code are configured to, with the one or more processors, cause the apparatus at least to:

> receive a remote control command with the radio transceiver; and
> on the basis of the received remote control command, control the relay on, coupling the resistor in parallel with the conductor and thus decreasing the resistance measured by the thermostat in the conductor.

2. The apparatus of claim 1, wherein the one or more memories and the computer program code are further configured to, with the one or more processors, cause the apparatus further to:

> on the basis of the received remote control command, control the relay off, coupling the resistor off from the conductor and thus removing the decrease in the resistance measured by the thermostat in the conductor.

3. The apparatus of any preceding claim, wherein, if the remote control command comprises a static temperature drop command, the relay is controlled on, causing the thermostat, while controlling the heating and/or cooling system to maintain a set resistance range, to lower the temperature produced by the heating and/or cooling system by a predetermined amount determined by the decrease in the resistance.

4. The apparatus of claim 3, wherein, if the remote control command comprises a return to normal temperature command, the relay is controlled off, causing the thermostat, while controlling the heating and/or cooling system to maintain the set resistance range, to remove the lowering of the temperature produced by the heating and/or cooling system by the predetermined amount.

5. The apparatus of any preceding claim, wherein, if the remote control command comprises a drop/normal temperature schedule command, the relay is controlled on the basis of the received drop/normal temperature schedule command such that a cycle comprising at least one period of normal temperature and at least one period of dropped temperature is realized.

6. The apparatus of any preceding claim, wherein, if the remote control command comprises a set target temperature, the one or more memories and the computer program code are further configured to, with the one or more processors, cause the apparatus further to repeat the following cycle with a predetermined frequency selected such that the set target temperature is maintained within a predetermined margin:

> measure a measured temperature reflecting the effect of the heating and/or cooling system;
> if the measured temperature is higher than the set target temperature, control the relay on, coupling the resistor in parallel with the conductor and thus decreasing the resistance measured by the thermostat in the conductor, causing the thermostat, while controlling the heating and/or cooling system to maintain a set resistance range, to lower the temperature produced by the heating and/or cooling system; or
> if the measured temperature is lower than the set target temperature, control the relay off, coupling the resistor off from the conductor and thus removing the decrease in the resistance measured by the thermostat in the conductor, causing the thermostat, while controlling the heating and/or cooling system to maintain the set resistance range, to remove the lowering of the temperature produced by the heating and/or cooling system.

7. The apparatus of claim 6, wherein the apparatus further comprises a temperature sensor to measure the measured temperature reflecting the effect of the heating and/or cooling system.

8. The apparatus of claim 6, wherein the one or more memories and the computer program code are further configured to, with the one or more processors, cause the apparatus further to:

> measure the measured temperature reflecting the effect of the heating and/or cooling system on the basis of resistance measured from the conductor.

9. The apparatus of any preceding claim, wherein, if the remote control command comprises a temperature schedule command, the relay is controlled on the basis of the received temperature schedule command such that a cycle comprising a plurality of periods with different temperatures is realized.

10. The apparatus of any preceding claim, wherein the electric interface is replaceable such that the electric interface with a specific resistance value is installed to match a specific nominal value of the negative temperature coefficient thermistor.

11. The apparatus of any preceding claim, wherein the resistor is replaceable such that the resistor with a specific resistance value is installed to match a specific nominal value of the negative temperature coefficient thermistor.

12. The apparatus of any preceding claim, wherein the relay comprises an electrically operated switch comprising a control circuit formed by the relay and the processor, and a controlled circuit formed by the thermostat, the conductor, the negative temperature coefficient thermistor, the relay, and the resistor provided that the relay is switched on.

13. The apparatus of any preceding claim, wherein the relay comprises at least one of the following: an electrically operated switch, a solid-state relay, an opto-isolator relay.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

Application Number

EP 14 15 3445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 336 902 A (NEAL ALBERT D) 29 June 1982 (1982-06-29) * column 3, line 33 - column 4, line 68; claims 1-4,7; figures 1-3 * | 1-13 | INV. G05D23/20 G05D23/24 |
| A | US 2007/114293 A1 (GUGENHEIM STEPHEN J [US]) 24 May 2007 (2007-05-24) * paragraphs [0041], [0050]; claim 1; figure 4 * | 1-13 | |

| TECHNICAL FIELDS SEARCHED (IPC) |
|---|
| G05D F24F |

The present search report has been drawn up for all claims

| Place of search | Date of completion of the search | Examiner |
|---|---|---|
| Munich | 23 October 2014 | Mallet, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 15 3445

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2014

| Patent document cited in search report | | Publication date | Patent family member(s) | | Publication date |
|---|---|---|---|---|---|
| US 4336902 | A | 29-06-1982 | NONE | | |
| US 2007114293 | A1 | 24-05-2007 | US 2007114293 | A1 | 24-05-2007 |
| | | | WO 2007120275 | A2 | 25-10-2007 |

EPO FORM P0459

For more details about this annex : see Official Journal of the European Patent Office, No. 12/82